# EUROPEAN PATENT APPLICATION

(11) **EP 1 607 663 A2**
(43) Date of publication of application: **21.12.2005**
(21) Application number: 05012913.9
(22) Date of filing: 15.06.2005
(51) Int. Cl.: F16K 31/06, F16K 27/04

(54) **Solenoid valve, manufacturing method thereof and binding method between iron-based material and aluminium-based member**

(30) Priority: 17.06.2004 JP 2004180035; 16.11.2004 JP 2004332061
(71) Applicant: AISIN SEIKI KABUSHIKI KAISHA, Kariya-shi, Aichi-ken 448-8650 (JP)
(72) Inventor: Inami, Madoka, Kariya-shi, Aichi-ken 448-8650 (JP); Higuchi, Tadashi, Kariya-shi, Aichi-ken 448-8650 (JP); Fujita, Masanao, Kariya-shi, Aichi-ken 448-8650 (JP); Kamidate, Yoshinobu, Kariya-shi, Aichi-ken 448-8650 (JP)
(74) Representative: Kramer - Barske - Schmidtchen

(57) **Abstract**

A solenoid valve (15) (20) comprises a plunger (4) (29) provided in a case (5) (23) so as to be magnetically moved, a coil provided in the case (5) (23) for generating a magnetic force, a yoke (6) (25) provided in the case (5) (23) for transmitting the magnetic force to the plunger (4) (29), a sleeve (1) (21) and a valve (2) (22) provided in the sleeve (1) (21) so as to be slidable within the sleeve (1) (21) in accordance with a movement of the plunger (4) (29) in order to switch a flow path, characterized in that the yoke (6) (25) and the sleeve (1) (21) are formed so as to be fitted together, and after the sleeve (1) (21) is fitted to the yoke (6) (25), the sleeve (1) (21) is fixed from outside of a portion at which the sleeve (1) (21) and either one of the case (5) or the yoke (25) are overlapped each other.

## Description

### FIELD OF THE INVENTION

The present invention generally relates to a solenoid valve for switching a fluid flow path of a hydraulic circuit such as an oil pressure circuit or a solenoid valve for providing a variable orifice by changing a cross sectional area of the flow path.

### BACKGROUND

A solenoid valve generally includes a cylindrical yoke, a coil wound around the yoke, a plunger provided inside the yoke so as to be movable in an axial direction of the yoke, and a valve moving within a sleeve together with the movement of the plunger in order to switch a flow path.

When power is supplied to the coil, a magnetic path is generated through the yoke and the plunger by which the plunger is attracted, as a result, the valve is actuated.

Known solenoid valves are disclosed in JP2000-39083A (especially in paragraphs 0004, 0005 and Fig.1), JP2003-329164A (especially in paragraphs 0033, 0034, and Fig.1 through 4) and JP11-002354A. According to such solenoid valves, an expanded portion is formed on the sleeve at the yoke side. The expanded portion is expanding in an outward-radial direction so as to be identical with the shape of the yoke. In other words, the diameter of the sleeve is elongated at the end portion of the sleeve. After the sleeve and the yoke are housed in a case, the sleeve is caulked by the end portion of the case in order to fix the sleeve to the yoke in a manner where the end portion of the case is bent inward.

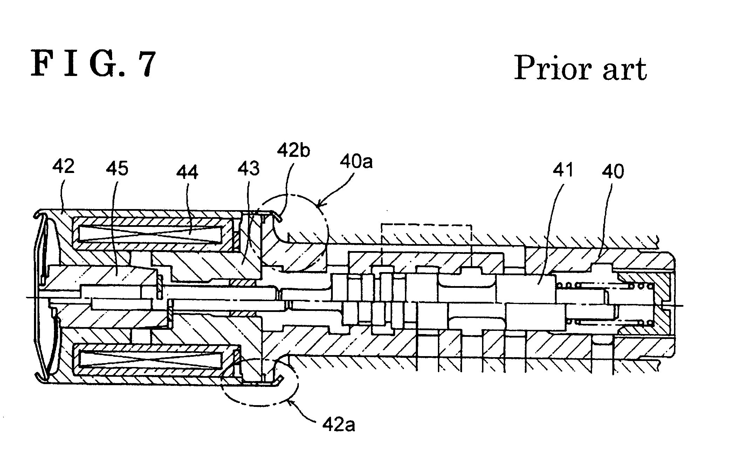

A conventional art will be explained more specifically in accordance with Fig.7.

As shown in Fig.7, a sleeve 40 houses a valve spool 41 so as to be movable in vertical direction in Fig.7. A left end portion of the sleeve 40 is expanded in a radial direction so as to form an expanded portion 40a, whose diameter is larger than a diameter of a central portion of the sleeve 40.

A yoke 43, a coil 44 and a plunger 45 are provided inside a case 42. When power is supplied to the coil 44, a magnetic path is formed among the coil 44, the yoke 43 and the plunger 45, and then the plunger 45 is moved in the right direction.

Because the plunger 45 is engaged with the valve spool 41, the valve spool 41 is also moved in conjunction with the movement of the plunger 45. Thus, the valve can be switched to be opened or closed. The case 42 includes a stepped portion 42a at which the case 42 can be engaged with the yoke 43.

The yoke 43 and the sleeve 40 are mounted to the case 42 as follow. First, a right end surface of the yoke 43 contacts to a left end surface of the expanded portion 40a of the sleeve 40. Then, a right end 42b formed on the case 42 is bent so as to fix the case 42 to the sleeve 40 and the yoke 43.

Generally, the solenoid valve is comprised of a valve mechanism such as a spool valve, and a solenoid mechanism for driving the valve mechanism, and such solenoid valve is housed in or connected to a variety of components. If such components are made of a metal other than an iron, such as an aluminum, a material of the component, which surrounds the solenoid valve, needs to be made of a metal except an iron, such as an aluminum in order to prevent a clearance generated by a thermal expansion difference between the solenoid valve and the component.

However, a portion in which the solenoid mechanism is housed cannot be made of an aluminum because a magnetic circuit is comprised of the portion in which the solenoid mechanism is housed. Thus, the sleeve in which the valve mechanism is housed is made of an aluminum-based material so as to be connected to a part of the solenoid mechanism such as a solenoid case.

In JP2000-39083A, JP2003-329164A and JP11-002354A, the sleeves are connected to the solenoid case by means of caulking. Further according to a solenoid valve disclosed in JP2002-122261A (especially in paragraphs 0024 through 0031 and Fig.2), a sleeve is connected to a solenoid case by welding in order to stop using O-ring, which is used for caulking.

The conventional art disclosed in JP2002-122261A employs a weld joint structure in which a flange portion of a sleeve is fixed to a solenoid case in a manner where the inner peripheral surface of the solenoid case overlaps on the outer peripheral surface of the flange portion of the sleeve.

The solenoid case is welded to the flange portion of the sleeve by means of a heat from a welding heat source (e.g. YAG laser) applied from a welding equipment such as a YAG laser welding device to the solenoid case, which is comprised of an iron-based material. Thus, the solenoid case that is comprised of an iron-based material is fused at first by means of the heat of the welding heat source, and then the heat is conducted to the sleeve, which is made of an aluminum-based material, as a result the aluminum-based material of the sleeve is fused. Then, the fused metal of the iron-based material and the fused metal of the aluminum-based material, are mixed together, and then such mixed metals are cooled so as to be hardened. In this way, the welding is applied to an entire circumference of the solenoid case in order to weld the solenoid case to the sleeve.

When the case is deformed so as to be caulked to the sleeve, an expanded portion, which is expanded outward, needs to be formed on the end portion of the sleeve to which the case is caulked in order to fix the sleeve to the case. In other words, a stepped portion needs to be formed on the sleeve in order to fix the sleeve to the case. As a result, costs for manufacturing the sleeve has been increased. Further, the sleeve needs to be designed in order to prevent a shaft thereof from being out of alignment. Furthermore, a stepped portion needs to be formed on the solenoid case, and inside of the stepped portion of the solenoid case, the sleeve and the yoke are provided so as to be coaxial with the solenoid case. Such solenoid case need to be manufactured precisely that may result in high cost.

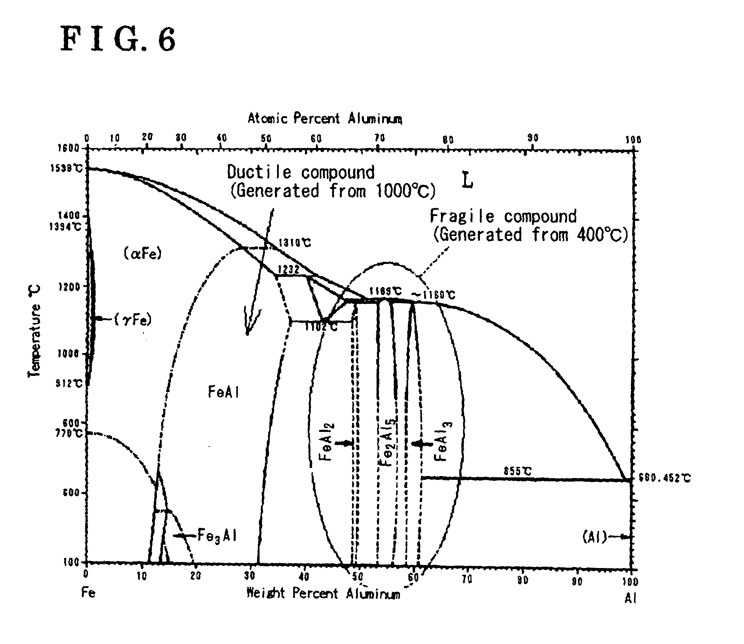

In addition, when the iron and the aluminum are fused at greater than 400 °C, a fragile compound or a ductile compound, such as aFeAI₂ or Fe₂AI₅, are made as indicated in a binary state diagram in Fig.6 (┌BINARY ALLOY PHASE DIAGRAMS(AECOND EDITION)┘ Vol.1, P.148, Published by ASM International).

When the aluminum of the sleeve and the iron-based fused metal of the solenoid case are fused and mixed together in order to connect the sleeve to the solenoid case, because the strength of the fused metal is small, a lot of fusion processes needs to be applied to many places, as a result, times and energy are required to fix the sleeve to the solenoid case.

Thus, a need exist for producing a solenoid valve in which a expanded portion, which is formed on a sleeve so as to protrude outwardly, is not formed in order to produce the solenoid valve at a moderate price. Specifically, a need exist for producing a solenoid valve in which an aluminum-based member of a sleeve can be fixed to an iron-based fused metal of the solenoid case at a moderate price.

### SUMMARY OF THE INVENTION

A solenoid valve (15) (20) comprises a plunger (4) (29) provided in a case (5) (23) so as to be magnetically moved, a coil provided in the case (5) (23) for generating a magnetic force, a yoke (6) (25) provided in the case (5) (23) for transmitting the magnetic force to the plunger (4) (29), a sleeve (1) (21) and a valve (2) (22) provided in the sleeve (1) (21) so as to be slidable within the sleeve (1) (21) in accordance with a movement of the plunger (4) (29) in order to switch a flow path, characterized in that the yoke (6) (25) and the sleeve (1) (21) are formed so as to be fitted together, and after the sleeve (1) (21) is fitted to the yoke (6) (25), the sleeve (1) (21) is fixed from outside of a portion at which the sleeve (1) (21) and either one of the case (5) or the yoke (25) are overlapped each other.

Thus, when a magnetic field is generated by the coil, a magnetic path is formed between the yoke and the plunge, as a result, the plunger is moved. Together with the movement of the plunger, the valve is moved within the sleeve so as to switch a flow path. In this solenoid valve, there is no need to form an expanded portion on the sleeve, the expanded portion being protruding outward. Thus, the sleeve can be manufactured by means of a simple cutting process. Further, because the yoke and the sleeve are formed so as to be able to fit together, the sleeve can be fit to the yoke coaxially therewith.

### BRIEF DESCRIPTION OF THE DRAWINGS

The foregoing and additional features and characteristics of the present invention will become more apparent from the following detailed description considered with reference to the accompanying drawings, wherein:
Fig.1 illustrates a cross section of a solenoid valve in the first embodiment according to the present invention;
Fig.2 illustrates a cross section of a solenoid valve in the second embodiment during a manufacturing process;
Fig.3 illustrates a front view of the solenoid valve in Fig.2 that has been assembled,
Fig.4 illustrates a cross section of a solenoid valve of another embodiment;
Fig.5 illustrates an enlarged diagram of a part of the solenoid valve in Fig.4;
Fig.6 illustrates a binary state diagram indicating a relationship between an iron and an aluminum, and
Fig.7 illustrates a cross section of a solenoid valve according to a related art.

### DETAILED DESCRIPTION

Embodiments to implement the present invention will be explained in accordance with drawings attached hereto.

### (First embodiment)

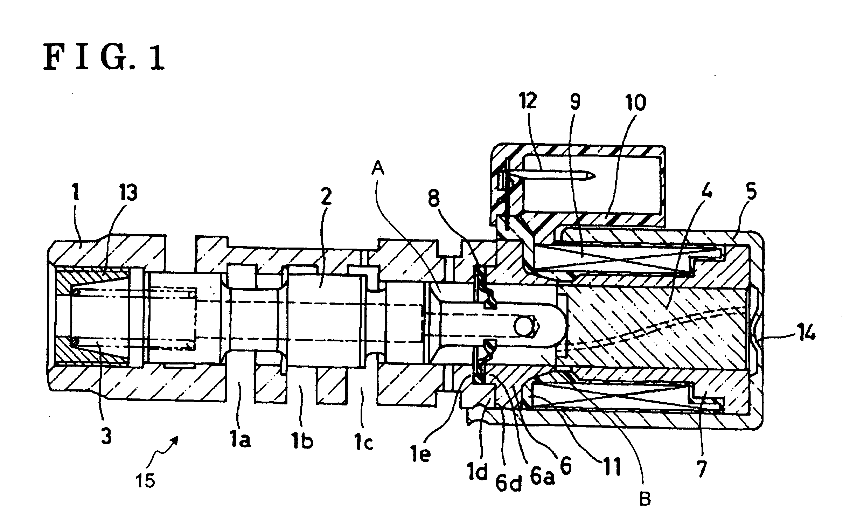

Fig.1 illustrates a cross section of a solenoid valve 20 according to the first embodiment. As shown in Fig.1, the solenoid valve 15 includes a hollowed cylindrical sleeve 1 having ports 1a, 1b and 1c, and a case 5 formed in a cup-shape and positioned at one side the sleeve 1 (right end in Fig.1). Further, a valve spool 2 is provided in the sleeve 1 so as to be movable within the sleeve 1 in an axial direction of the sleeve 1. A valve stopper 13 is fitted to the other side (left end in Fig.1) of the sleeve 1 in order to regulate the movement of the valve spool 2 in a left direction. Further, a spring 3 being compressed is provided between the valve spool 2 and the valve stopper 13 in order to bias the valve spool 2 in a right direction in Fig.1.

A cylindrical bobbin 11 to which a coil 9 is wound is provided in the case 5. In the bobbin 11, a first yoke 6 and a second yoke 7, which are made of a magnetic material, are provided coaxially. More specifically, the first yoke 6 is positioned inside and on the left side of the bobbin 11 in Fig.1. On the other hand, the second yoke 7 is positioned inside and the right side of the bobbin 11.

Inside the both yokes 6 and 7, a cylindrical plunger 4, which is made of a magnetic material, is provided so as to be movable in a longitudinal direction in Fig.1. A left end of the plunger 4 in Fig.1 engages with an end portion of the valve spool 2, which is biased by means of the spring 3, and a right end of the plunger 4 in Fig.1 engages with a stopper 14, which is formed on a bottom portion of the cup-shaped case 5 integrally therewith, in order to regulate the rightward movement of the plunger 4.

On the outside of the case 5, a connector 10 having a terminal 12, which is electrically connected to an end portion of the coil 9, is provided. When power is supplied to the terminal 12, the coil 9 is conducted, as a result, a magnetic field is generated through the coil 9, the first yoke 6 and the second yoke 7, which are functioning together.

Further, a diaphragm 8 is provided between the sleeve 1 and the yoke 6. Specifically, an inner peripheral portion of the diaphragm 8 is fit to a groove, which is formed near the right end portion of the valve spool 2, and an outer peripheral portion of the diaphragm 8 is sandwiched between the right end of the sleeve 1 and the left end of the yoke 6. By use of the diaphragm 8, a space inside the solenoid valve 15 is divided into a space A, which is formed by the diaphragm 8, the sleeve 1 and the valve spool 2, and a space B, which is formed by the diaphragm 8, the first yoke 6 and the plunger 4.

A protruding portion 1d, whose outer diameter is identical with an outer diameter of the sleeve 1, is formed on the right end of the sleeve 1. Further, a protruding portion 6a, whose inner diameter is identical with an inner diameter of the first yoke 6, is formed on the left end of the yoke 6. The inner diameter of the protruding portion 1d of the sleeve 1 is approximately identical with the outer diameter of the protruding portion 6a of the first yoke 6.

A protruding length of the protruding portion 1d of the sleeve 1 is longer than a protruding length of the protruding portion 6a of the first yoke 6. In circumstances where the protruding portion 1d of the sleeve 1 is engaged with an outer surface 6d (left surface in Fig.1) of the first yoke 6, an outer peripheral portion of the diaphragm 8 is positioned in a space, which is formed between a left end surface of the protruding portion 6a of the first yoke 6 and an inner surface 1e of the sleeve 1, and sandwiched therebetween.

After the second yoke 7, the bobbin 11 with the coil 9, the plunger 4 and the first yoke 6 are assembled to the case 5, the sleeve 1 to which the valve spool 2 is mounted is fixed to the case 5 by means of a laser welding or a caulking at point where the case 5 overlaps on the sleeve 1 from outside of the case 5. Thus, the sleeve 1 is fixed to the case 5.

At this point, the first yoke 6, the bobbin 11 and the second yoke 7 are fixed within the case 5 in circumstances where the sleeve 1 is positioned coaxially with the first yoke 6.

The port 1a and the port 1b are communicating when the valve spool 2 is in a state shown in Fig.1 When the coil 9 is conducted so that the valve spool 2 is moved leftward in Fig.1, the communication between the port 1a and the port 1b is closed.

An actuation of the solenoid valve 15 having the above configuration will be explained.

When the power is not supplied to the coil 9, the valve spool 2 and the plunger 4 are biased rightward in Fig.1 by means of the spring 3, and the plunger 4 is engaged with the stopper 14 so that the movement of the plunger 4 is limited.

In this state, the port 1a and the port 1b are communicating by means of the valve spool 2. On the other hand, when the terminal 12 is energized so as to supply the power to the coil 9, a magnetic field is generated around the coil 9. Because the magnetic field passes through the first yoke 6, the plunger 4 and the second yoke 7 sequentially (or in a reverse direction), a force is applied to the plunger 4 in the left direction in Fig.1.

Thus, the valve spool 2 and the plunger 4 are integrally moved leftward against the biasing force of the spring 3 by means of the magnetic force, as a result, the communication between the port 1a and the port 1b is closed.

By adjusting the level of the power supplied to the coil 9 by means of a duty control, the valve spool 2 is controlled so as to stop at an intermediate position, or by controlling the valve spool 2 so as to be opened/closed rapidly, diameters of the orifices of the port 1a and the port 1b are adjusted. Such solenoid valve is called a linear solenoid valve.

Even when foreign objects is mixed into fluid that flows into the ports 1a, 1b and 1c, such foreign objects can be stopped in front of the plunger 4 by means of the diaphragm 8.

In the above configuration, the case 5 can be made of a steel plate by means of a press molding. Because the stopper 14 is formed integrally with the case 5, the number of the parts used for manufacturing the solenoid valve 15 can be reduced. Further, because the stopper 14 is coaxial with the case 5, the end portion of the case 5 doesn't need to be manufactured all that precisely. Further, because the thickness of the case 5 except a portion, at which the stopper 14 is formed, is formed so as to be even, the case 5 can be made of a plate, which has a uniform thickness, as a result, the cost of the case 5 can be reduced.

Further, the diameter of the outer peripheral surface of the sleeve 1, including the protruding portion 1d, are basically even, so that the sleeve 1 can be formed simply by processing the ports 1a, 1b and 1c to a cylindrical member. Thus, the cost for processing the sleeve 1 can be reduced.

When the sleeve 1 is fixed to the case 5 by means of a caulking, it is preferable that a groove for caulking is formed on the sleeve 1 in advance. Thus, the case 5 can be fixed to the sleeve 1 in a manner where the case 5 is deformed so as to fit into the groove formed on the sleeve 1 by pressing the case 5 from outside thereof.

When a laser welding or a caulking is used in order to fix the case 5 to the sleeve 1, a load is applied radially. Thus, because a level of a load, which is applied to the solenoid valve 15 in an axial direction, is small, the level of a caulking load that is applied to the bobbin 11 and the yokes 6 and 7 can be reduced.

A configuration of the first embodiment according to the present invention is not limited to the above configuration. The configuration of the first embodiment may be modified as follow.

In the first embodiment, the valve is comprised of the sleeve 1 and the valve spool 2, which slides within the sleeve 1. However, another type of a valve may be used alternatively. In addition, the shape of the valve may be changed so as to have three ports or more.

Further, the cylindrical protruding portion of the sleeve 1 is fit to the cylindrical protruding portion of the first yoke 6 in the first embodiment. The shapes of the protruding portions are not limited to the cylindrical shape. The protruding portions may be formed in another shape. However, because the shape of the sleeve 1 and the first yoke 6 is cylindrical, it is preferable that the shape of each of the protruding portions is the same as the shape of the sleeve 1 and the first yoke 6. In this configuration, the process for manufacturing the sleeve 1 and the first yoke 6 can be simplified, and the cost of manufacturing the sleeve 1 and the first yoke 6 can be reduced.

Further, in the first embodiment, the sleeve 1 is fixed to the case 5 by means of a laser welding or a caulking. When the sleeve 1 is fixed to the case 5 by means of a laser welding, there is no need to use a screw. Further, when the sleeve 1 is fixed to the case 5 by means of a caulking, there is also no need to use a screw; in addition, an assembling process can be simplified . Another fixing method can be used alternatively. For example, the sleeve 1 may be fixed to the case 5 by means of a screw.

### (Second embodiment)

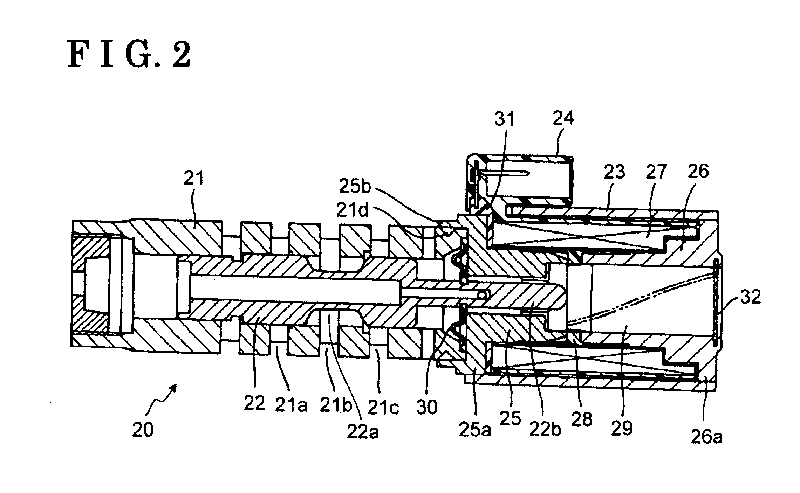

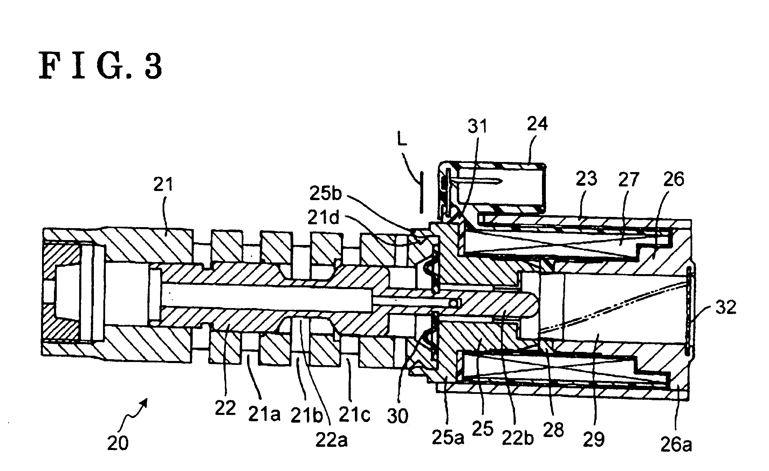

Fig.2 and Fig.3 illustrate cross sections of the solenoid valve 20 according to the second embodiment. Specifically, Fig.2 illustrates the solenoid valve 20 in which a sleeve 21 is not fixed to the solenoid member, and Fig.3 illustrates the solenoid valve 20 in which the sleeve 21 has been fixed to the solenoid member. The solenoid valve 20 includes a valve mechanism, which is comprised of a sleeve 21 and a spool valve 22, and a solenoid mechanism, which is comprised of a case 23, a housing 24, a first yoke 25, a second yoke 26, a coil 27, a plug 28, a plunger 29, and a bobbin 31.

The sleeve 21 is formed in a cylindrical shape, and ports 21a, 21b and 21c are formed on the sleeve 21. The sleeve 21 is mounted to a valve block (not shown) after the solenoid valve has been assembled. In order to enhance an ability to fix to the valve block, the sleeve 21 is made of approximately the same material as a material of the valve block.

Normally, the sleeve 21 is made of an aluminum-based material (a metal whose main material is an aluminum). The spool valve 22 is formed in a long shape and provided so as to be slidable on an inner surface of the sleeve 21.

A groove 22a is formed on the spool valve 22, and the groove 22a and ports 21a, 21b and 21c of the sleeve 21 are selectively switched in accordance with the movement of the spool valve 22 in order to switch a flow path that is connected to the port.

In the solenoid mechanism, the bobbin 31 that is made of resin so as to be in a cylindrical shape is wound by the coil 27, and a housing 24 is molded by resin on an outer peripheral surface of the bobbin 31 so as to be integral therewith.

An end portion of the coil 27 is electrically connected to a terminal of a connector. Further, a cylindrical plug 28 is provided inside the bobbin 31, and the first yoke 25 is connected to the cylindrical plug 28 from one side thereof, and the second yoke 26 is connected to the cylindrical plug 28 from the other side thereof.

Both first yoke 25 and the second yoke 26 are formed in a cylindrical shape, and a flange portion 25a, protruding in an radially outward direction, is formed on an end portion of the first yoke 25, and a flange portion 26a, protruding in a radially outward direction, is formed on an end portion of the second yoke 26. The first yoke 25, the second yoke 26 and the bobbin 31 with the coil 27 are inserted into the cylindrical case 23 in circumstances where an outer peripheral surface of the flange portion 25a of the first yoke 25 is engaged with the cylindrical case 23, and an outer peripheral surface of the flange portion 26a of the second yoke 26 is engaged with the cylindrical case 23.

The plunger 29 is formed in a cylindrical shape so as to be slidable within a cylindrical space formed inside the first yoke 25, the plug 28 and the second yoke 26. The plug 28 is made of resin, and the first yoke 25, the second yoke, the case 23 and the plunger 29 are made of a iron-based fused metal which includes high-permeability (a material which mainly includes an iron that can be fused by heat)

An end portion 22b of the spool valve 22 is extending so as to reach inside the solenoid mechanism in a manner where the end portion 22b penetrates inside the first yoke 25. Thus, the spool valve 22 engages with the plunger 29 at the end portion 22b of the spool valve 22. A biasing force is applied to the spool valve 22 by means of a spring in a direction so that the end portion 22b of the spool valve 22 engages with the plunger 29. When the power is not supplied to the coil 27, the plunger 29 is biased by means of the spring so that the position of the plunger 29 is limited by means of the stopper 32, which is fixed to the second yoke 26.

The first yoke 25 includes a cylindrical portion 25b, and as shown in Fig.2, an end portion of the sleeve 21 is fit in the cylindrical portion 25b so as to be overlapped each other. On the end portion of the sleeve 21, which overlaps on the cylindrical portion 25b, a groove 21d is formed so as to be in a V-shape.

Further, the diaphragm 30 is provided between the sleeve 21 and the first yoke 25, and the sleeve 21 is fit to the first yoke 25 by means of an elastic diaphragm 30. Specifically, an outer peripheral portion of the diaphragm 30 is sandwiched between the sleeve 21 and the first yoke 25, and an inner peripheral portion of the diaphragm 30 is fit in a groove, which is formed on the end portion 22b of the spool valve 22.

After the solenoid valve is assembled as shown in Fig.2, a laser L (e.g. YAG laser) is applied to a portion at which the first yoke 25 overlaps on the groove 21d of the sleeve 21, from outside of the cylindrical portion 25b.

Because the first yoke 25 is made of an iron-based material, when the laser radiation is applied to the first yoke 25, the first yoke 25 is fused at a portion where the laser radiation is applied, and then the fused iron-based material is stored into the groove 21d. When the application of the laser radiation is stopped, the fused iron-based material is cooled and hardened in the groove 21d. Thus, the sleeve 21 is fixed to the first yoke 25.

As mentioned above, when the power is not supplied to the terminal of the connector, the plunger 29 is biased by means of the spring so that the position of the plunger 29 is limited by means of the stopper 32, which is fixed to the second yoke 26.

Once the power is supplied to the terminal of the connector, the power is applied to the coil 27 in order to generate a magnetic field in a manner where a line of magnetic force of the magnetic field goes round through the yoke 26, the plunger 29, the first yoke 25 and the case 23 (or through the case 23, the first yoke 25, the plunger 29 and the yoke 26). At this point, an attraction force is generated between the first yoke 25 and the plunger 29, and the plunger 29 is drawn by the first yoke 25. Along with the movement of the plunger 29, the spool valve 22 is also moved; as a result, the flow path connected to the port is switched in order to function as a solenoid valve.

It is preferable that YAG laser or CO₂ laser is applied to the overlapped portion. Instead of the laser radiation, plasma may be applied to the overlapped portion in order to fuse the iron-based material. Further, the iron-based material may be heated by means of another method in order to fuse the overlapped portion. However, because the connector portion of the solenoid valve is protruding as shown in Figs.2 and 3, it is preferable that the laser radiation is applied to a point so as to be heated and fused.

When the laser is applied from the above of the solenoid valve 20, it is preferable that a central axis of the solenoid valve 20 is positioned horizontally. Even when the solenoid valve 20 is positioned so as to be tilted ±45 degrees relative to a horizontal line, the fused metal can be stored in the groove 21d. Thus, when the position of the solenoid valve 20 is limited in the manufacturing process, the solenoid valve 20 may be positioned so as to be tilted.

In the second embodiment shown in Fig.2, the diaphragm 30 is provided in order to seal between the sleeve 21 and the first yoke 25. Thus, the groove 21d needs to be formed on at least one portion of the outer peripheral surface of the sleeve 21. More preferably, the groove 21d formed on the end portion of the sleeve 21 may be provided on entire circumference of the outer peripheral surface of the sleeve 21, and the laser is applied from above of the solenoid valve 20 toward the groove 21d by rotating the solenoid valve 20 through 360-degree about its axis. Thus, fused material is stored into the groove 21d over entire circumference; as a result, the sleeve 21 can be firmly fixed to the first yoke 25.

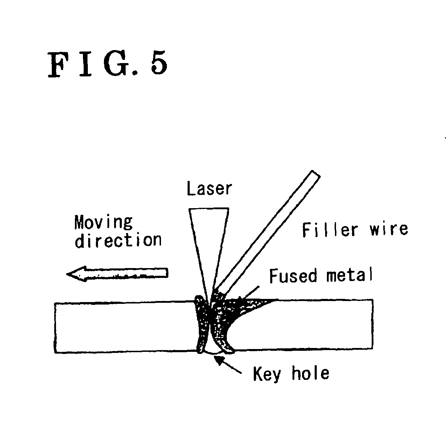

When the laser is applied to the first yoke 25, the metal of the first yoke 25 may evaporate, and the metal around the evaporate portion may be fused, and then the fused metal is stored into the groove 21d. In this case, the amount of the fused metal, which is stored in the groove 21d, may short. Thus, if the amount of the fused metal stored in the groove 21d shorts, a filler wire 33 may be used in order to compensate the amount of the fused metal. Specifically, the filler wire 33 is placed near the first yoke 25 to which the laser is applied, and the filler wire 33 is fused at the same time as the first yoke 25 is fused by applying the laser in order to compensate the amount of the fused metal. Then, as shown in Fig.5, the fused filler wire 33 is stored into a keyhole, which is formed due to the evaporation of the metal of the first yoke 25 by the laser radiation, in order to increase the amount of the fused metal stored in the groove 21d. Furthermore, in order to increase the amount of the fused metal, the solenoid valve 20 may be moved in an axial direction thereof while the laser is applied to the first yoke 25. Further, when the groove 21d is formed through entire circumference of the outer peripheral surface on the end portion of the sleeve 21, the solenoid valve 20 may be reciprocated in an axial direction thereof and rotated through 360-degree about its axis while the laser is applied to the first yoke 25.

In the second embodiment, the first yoke 25 of the solenoid member is fixed to the sleeve 21. In this method, the outer peripheral surface of the sleeve 21 is fit in a portion of the cylindrical portion 25b of the first yoke 25, the portion not being fused by the laser.

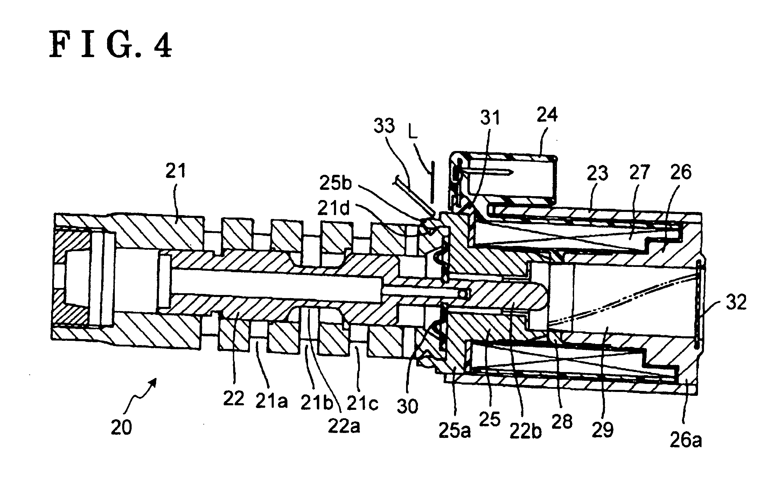

However, the sleeve 21 may be fixed to another component of the solenoid mechanism. For example, the sleeve 21 may be fit to the end portion of the case 23, the end portion being extended, and a laser is applied to the case 23 from the outside thereof. When a diameter of the sleeve 21 is near the diameter of the sleeve 21, and a design can be changed by simply changing the outer diameter of the case 23 so as to be identical with the inner diameter of the case 23, as a result, and such design change may result in low costs. In the solenoid valve in which the first yoke 25 is fixed to the sleeve 21 according to the second embodiment shown in Figs.2 through 4, the case 23 is formed in a cylindrical shape, and that may result in low costs.

In the second embodiment, a spool valve is used as a valve mechanism, however, another type of valve may be used as a valve mechanism. Further, the structure of the solenoid mechanism may not be limited to the second embodiment.

This invention may be applied to a binding method between an iron-based member, which is made of an iron-based material so as to include a cylindrical portion, and an aluminum-based member, which is made of an aluminum-based member so as to include a cylinder portion or a column portion and is inserted into the cylindrical portion of the iron-based member.

In the second embodiment, the iron based member is the first yoke 25 including the cylindrical portion 25b, however, the shape of the first yoke 25 may not be cylindrical, and may be a tube-shape. Further, the aluminum-based member is the sleeve 21, and the sleeve 21 is formed in a cylindrical shape, however, unless the sleeve 21 is inserted in the iron-base member, the sleeve 21 may be formed in a tube-shape or a column shape. The tube portion or the column portion of the aluminum-based member is inserted in the cylindrical portion of the iron-based member so as to overlapped each other, and in circumstances where the groove is positioned under the overlapped portion of the iron-based member, the overlapped portion of the iron-based member is fused.

In this alternative configuration, the overlapped portion of the iron-based member may be fused by means of a laser radiation in the same manner as the second embodiment. Further, a filler wire may be used at the overlapped portion to compensate the fused metal in the same manner as the second embodiment.

According to Claim 1, a solenoid valve comprises a plunger provided in a case so as to be magnetically moved, a coil provided in the case for generating a magnetic force, a yoke provided in the case for transmitting the magnetic force to the plunger, a sleeve and a valve provided in the sleeve so as to be slidable within the sleeve in accordance with a movement of the plunger in order to switch a flow path, wherein the yoke and the sleeve are formed so as to be fitted together, and after the sleeve is fitted to the yoke, the sleeve is fixed from outside of a portion at which the sleeve and either one of the case or the yoke are overlapped each other. Thus, when a magnetic field is generated by the coil, a magnetic path is formed between the yoke and the plunge, as a result, the plunger is moved. Together with the movement of the plunger, the valve is moved within the sleeve so as to switch a flow path. In this solenoid valve, there is no need to form an expanded portion on the sleeve, the expanded portion being protruding outward. Thus, the sleeve can be manufactured by means of a simple cutting process. Further, because the yoke and the sleeve are formed so as to be able to fit together, the sleeve can be fit to the yoke coaxially therewith.

According to Claim 2, a shape of an inner peripheral surface of the case is identical with a shape of an outer peripheral surface of the sleeve, and after the sleeve is fitted to the case, and the sleeve is mounted to the yoke, the case and the sleeve are fixed together from outside of a portion at which the sleeve and the case are overlapped each other. Thus, when a magnetic field is generated by the coil, a magnetic path is formed between the yoke and the plunge, as a result, the plunger is moved. Together with the movement of the plunger, the valve is moved within the sleeve so as to switch a flow path. In this solenoid valve, there is no need to form an expanded portion on the sleeve, the expanded portion being protruding outward. Thus, the sleeve can be manufactured by means of a simple cutting process. Further, because the yoke and the sleeve are formed so as to be able to fit together, the sleeve can be fit to the yoke coaxially therewith. Furthermore, the case is fixed to the sleeve in circumstances where the yoke is sandwiched between the case and the sleeve, as a result the yoke can be fixed between the case and the sleeve. In this configuration, the case is formed in a simple cup-shape, so that the cost for manufacturing the solenoid valve can be reduced.

According to Claim 3, a groove that is used for the caulking is formed on the sleeve. Thus, the sleeve can be precisely fixed to the case, and the solenoid valve can have a waterproof structure. Such solenoid valve can be made at a moderate cost.

According to Claim 4, a diaphragm is provided between the sleeve and the yoke in a manner where its inner peripheral portion is fixed to the valve, and its outer peripheral portion is sandwiched between the yoke and the sleeve, and a stepped portion is formed on the diaphragm through which the sleeve is concentricity fit to the yoke. Thus, a solenoid side, in which a magnetic field is generated when power is supplied to the coil, can be sealed and separated from a valve side, in which a flow path is switched. Further, an outer peripheral portion of the diaphragm can be fixed at the same time when the sleeve is fit to the yoke, as a result, manufacturing efficiency can be improved. Such solenoid valve can be made at a moderate cost.

According to Claim 5, the yoke includes a cylindrical portion, a part of the sleeve is overlapped on an inner surface of the cylindrical portion of the yoke, the sleeve includes a groove on which the yoke is overlapped, the yoke is fused at a portion where the yoke and the sleeve are overlapped each other, and the fused yoke is reserved in the groove of the sleeve. Thus, the fused metal of the overlapped portion of the yoke is reserved in the groove of the sleeve and then the fused metal is hardened in the groove. Thus, the sleeve is fixed to the yoke by means of the metal in the groove.

According to Claim 6, a binding method between an iron-based member and an aluminum-based member, the iron-based member being made of an iron-based material so as to include a cylindrical portion, and the aluminum-based member being made of an aluminum-based material so as to include a cylindrical portion or a column portion, which is overlapped on an inner peripheral surface of the cylindrical portion of the iron-based member, comprises processes of forming a groove on the cylindrical portion or the column portion of the aluminum-based member, inserting the cylindrical portion or the column portion of the aluminum-based member into the cylindrical portion of the iron-based member so as to be overlapped each other, and fusing the iron-based member at a portion on which the iron-based member and the aluminum-based member are overlapped each other in circumstances where the groove is positioned under the iron-based member on which the aluminum-based member is overlapped. Thus, the fused metal of the overlapped portion of the iron-based member is reserved in the groove of the aluminum-based member, and then the fused metal is hardened in the groove. Thus, the aluminum-based member is fixed to the iron-based member by means of the metal in the groove.

According to Claim 7, the iron-based member is fused by means of a laser radiation at the portion on which the aluminum-based member is overlapped. Thus, only the over lapped portion of the iron-based member can be fused in a short period of time.

According to Claim 8, when the iron-based member is fused by means of the laser radiation, a filler wire is positioned at the portion where the iron-based member is fused. Thus, the fused iron-based member and the fused filler wire are mixed so as to increase the amount of the fused metal reserved in the groove of the aluminum-based member.

According to Claim 9, a binding method between a sleeve and a solenoid mechanism of a solenoid valve, the sleeve housing a valve mechanism and the solenoid mechanism driving the valve mechanism, comprises processes of forming a cylindrical portion on a solenoid component, which is made of an iron-based material, the solenoid component being a part of the solenoid mechanism, inserting a part of the sleeve into the cylindrical portion of the solenoid component so as to be overlapped thereon, forming a groove on the sleeve at a portion on which the solenoid component is overlapped, and fusing the solenoid component at the portion on which the sleeve is overlapped in circumstances where the groove is positioned under the solenoid component on which the sleeve is overlapped. Thus, the fused metal of the overlapped portion of the solenoid member is reserved in the groove of the sleeve, and then the fused metal is hardened in the groove. Thus, the sleeve is fixed to the solenoid member by means of the metal in the groove.

According to Claim 10, the solenoid component is fused at the portion on which the sleeve is overlapped by means of a laser radiation. Thus, only the over lapped portion of the solenoid member can be fused in a short period of time.

According to Claim 11, when the solenoid component is fused by means of the laser radiation, a filler wire is positioned at the portion where the solenoid component is fused. Thus, the fused solenoid member and the fused filler wire are mixed so as to increase the amount of the fused metal reserved in the groove of the sleeve.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A solenoid valve (15; 20) comprising:
a plunger (4; 29) provided in a case (5; 23) so as to be magnetically moved;
a coil provided in the case (5; 23) for generating a magnetic force;
a yoke (6; 25) provided in the case (5; 23) for transmitting the magnetic force to the plunger (4; 29);
a sleeve (1; 21) and
a valve (2; 22) provided in the sleeve (1; 21) so as to be slidable within the sleeve (1; 21) in accordance with a movement of the plunger (4; 29) in order to switch a flow path,
**characterized in that** the yoke (6; 25) and the sleeve (1; 21) are formed so as to be fitted together, and after the sleeve (1; 21) is fitted to the yoke (6; 25), the sleeve (1; 21) is fixed from outside of a portion at which the sleeve (1; 21) and either one of the case (5) or the yoke (25) are overlapped each other.

2. A solenoid valve (15) according to Claim 1, wherein a shape of an inner peripheral surface of the case (5) is identical with a shape of an outer peripheral surface of the sleeve (1), and after the sleeve (1) is fitted to the case (5), and the sleeve (1) is mounted to the yoke (6), the case (5) and the sleeve (1) are fixed together from outside of a portion at which the sleeve (1) and the case (5) are overlapped each other.

3. A solenoid valve (15) according to Claim 1 or 2, wherein the case (5) and the sleeve (1) are fixed together by means of caulking, and a groove that is used for the caulking is formed on the sleeve (1).

4. A solenoid valve (15) according to one of Claims 1-3, wherein a diaphragm (8) is provided between the sleeve (1) and the yoke (6) in a manner where its inner peripheral portion is fixed to the valve (2), and its outer peripheral portion is sandwiched between the yoke (6) and the sleeve (1), and a stepped portion is formed on the diaphragm (8) through which the sleeve (1) is concentricity fit to the yoke (6).

5. A solenoid valve (20) according to one of Claims 1-4, wherein the yoke (25) includes a cylindrical portion (25b), a part of the sleeve (21) is overlapped on an inner surface of the cylindrical portion (25b) of the yoke (25), the sleeve (21) includes a groove (21d) on which the yoke (25) is overlapped, the yoke (25) is fused at a portion where the yoke (25) and the sleeve (21) are overlapped each other, and the fused yoke (25) is reserved in the groove (21d) of the sleeve (21).

6. A binding method between an iron-based member and an aluminum-based member, the iron-based member being made of an iron-based material so as to include a cylindrical portion, and the aluminum-based member being made of an aluminum-based material so as to include a cylindrical portion or a column portion, which is overlapped on an inner peripheral surface of the cylindrical portion of the iron-based member,
**characterized in that** the binding method between the iron-based member and the aluminum-based member further comprises processes of:
forming a groove on the cylindrical portion or the column portion of the aluminum-based member;
inserting the cylindrical portion or the column portion of the aluminum-based member into the cylindrical portion of the iron-based member so as to be overlapped each other,
and
fusing the iron-based member at a portion on which the iron-based member and the aluminum-based member are overlapped each other in circumstances where the groove is positioned under the iron-based member on which the aluminum-based member is overlapped.

7. A binding method between an iron-based member and an aluminum-based member according to Claim 6, wherein the iron-based member is fused by means of a laser radiation at the portion on which the aluminum-based member is overlapped.

8. A binding method between an iron-based member and an aluminum-based member according to Claim 6, when the iron-based member is fused by means of the laser radiation, a filler wire (33) is positioned at the portion where the iron-based member is fused.

9. A binding method between a sleeve (21) and a solenoid mechanism of a solenoid valve (20), the sleeve (21) housing a valve mechanism and the solenoid mechanism driving the valve mechanism,
**characterized in that** the binding method between the sleeve (21) and the solenoid mechanism of the solenoid valve (20) further comprises processes of:
forming a cylindrical portion on a solenoid component, which is made of an iron-based material, the solenoid component being a part of the solenoid mechanism;
inserting a part of the sleeve (21) into the cylindrical portion of the solenoid component so as to be overlapped thereon;
forming a groove on the sleeve (21) at a portion on which the solenoid component is overlapped, and
fusing the solenoid component at the portion on which the sleeve (21) is overlapped in circumstances where the groove is positioned under the solenoid component on which the sleeve (21) is overlapped.

10. A binding method between a sleeve (21) and a solenoid mechanism of a solenoid valve (20) according to Claim 9, wherein the solenoid component is fused at the portion on which the sleeve (21) is overlapped by means of a laser radiation.

11. A binding method between a sleeve (21) and a solenoid mechanism of a solenoid valve (20) according to Claim 9, wherein when the solenoid component is fused by means of the laser radiation, a filler wire (33) is positioned at the portion where the solenoid component is fused.
